(19) Europäisches Patentamt
European Patent Office
Office européen des brevets

(11) Veröffentlichungsnummer: **0 038 453 B1**

(12) **EUROPÄISCHE PATENTSCHRIFT**

(45) Veröffentlichungstag der Patentschrift: **25.05.83**

(51) Int. Cl.³: **C 09 B 62/10**

(21) Anmeldenummer: **81102518.8**

(22) Anmeldetag: **03.04.81**

(54) **Verfahren zur Herstellung von wasserlöslichen Phthalocyaninfarbstoffen.**

(30) Priorität: **16.04.80 DE 3014662**

(43) Veröffentlichungstag der Anmeldung: **28.10.81 Patentblatt 81/43**

(45) Bekanntmachung des Hinweises auf die Patenterteilung: **25.05.83 Patentblatt 83/21**

(84) Benannte Vertragsstaaten: **CH DE FR GB IT LI**

(56) Entgegenhaltungen:
**CH-A-473 878**
**DE-A-2 208 475**
**FR-A-2 022 724**
**GB-A-1 028 811**

(73) Patentinhaber: **BAYER AG, Zentralbereich Patente, Marken und Lizenzen, D-5090 Leverkusen 1, Bayerwerk (DE)**

(72) Erfinder: **Durchardt, Karl Heinz, Dr., Gerstenkamp 21, D-5000 Köln 80 (DE)**
Erfinder: **Groll, Manfred, Dr., Haferkamp 6, D-5000 Köln 80 (DE)**

EP 0 038 453 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Verfahren zur Herstellung von wasserlöslichen Phthalocyaninfarbstoffen

Die Erfindung betrifft ein neues Verfahren zur Herstellung von wasserlöslichen Phthalocyaninfarbstoffen, die in Form ihrer freien Säuren der Formel

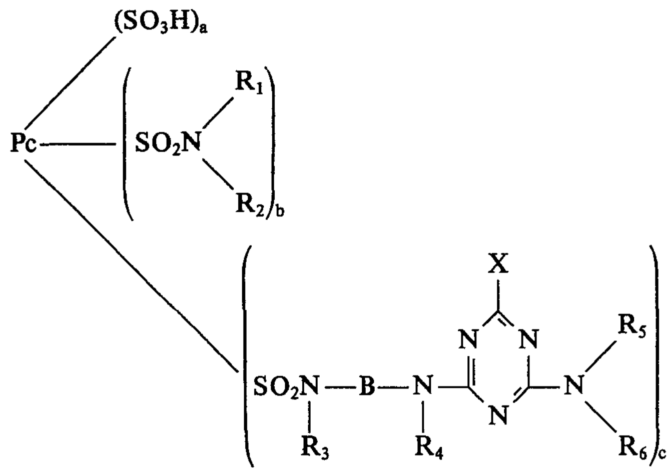

(I)

entsprechen, worin

Pc = Rest eines Kupfer- oder Nickelphthalocyanins
$R_1$, $R_2$ = Wasserstoff, gegebenenfalls substituiertes Alkyl oder worin $R_1$ und $R_2$ zusammen mit dem durch sie eingeschlossenen Stickstoffatom einen fünf- oder sechsgliedrigen heterocyclischen Ring bilden und worin
$R_3$, $R_4$ = Wasserstoff oder gegebenenfalls substituiertes Alkyl
B = gegebenenfalls substituiertes aromatisches oder aliphatischen Brückenglied,
$R_5$, $R_6$ = Wasserstoff oder organischer Rest oder worin $R_5$ und $R_6$ zusammen mit dem durch sie eingeschlossenen Stickstoffatom einen gegebenenfalls weitere Heteroatome enthaltenden heterocyclischen Ring bilden

und wobei

X = Fluor oder Chlor

und wobei

a = 1 bis 3
b = 0 bis 2
c = 1 oder 2 bedeuten,

und wobei die Summe (a + b + c) die Zahl 4 nicht übersteigen soll.

Die Erfindung betrifft weiterhin die Herstellung von Mischungen der Farbstoffe gemäß Formel (I).

Bisher bekannt gewordene Verfahren zur Herstellung von Farbstoffen der allgemeinen Formel I bzw. von ähnlich strukturierten Phthalocyanin-Farbstoffen beinhalten alle einen Mehrstufenprozeß.

Siehe z. B.

1) DE-A-2 208 475, wo das isolierte nicht-reaktivgruppenhaltige Phthalocyaninderivat mit der Reaktivkomponente X – Z unter Abspaltung von H – X umgesetzt wird.
2) FR-A-2 022 724, wo eine dem obigen Verfahren 1) analoge Umsetzung durchgeführt wird.
3) GB-A-1 028 811, deren Herstellungsverfahren ebenfalls den unter 1) und 2) genannten entspricht, wobei hier nach dem Umsatz mit dem Cyanurhalogenid gegebenenfalls noch eine Reaktion mit Ammoniak oder organischen primären oder sekundären Aminen folgt.
4) CH-A-473 878, wo eine wäßrige Suspension eines Phthalocyaninsulfochlorids mit dem getrennt hergestellten, bereits das bifunktionelle Diamino-Brückenglied tragende Halogentriazino-Reaktivsystem umgesetzt wird. Siehe dazu Spalte 3, Zeile 39 bis Spalte 4, Zeile 25.
5) Als im Hinblick auf das vorliegende Verfahren nächster Stand der Technik ist US-A-4 267 107 zu bezeichnen, wo identische Farbstoffe ebenfalls im Sinne einer Mehrstufenreaktion unter Isolierung von Zwischenstufen hergestellt werden. Dieses Herstellungsverfahren beruht in Analogie zu den unter 1) bis 3) genannten, auf einer Umsetzung mit der Reaktivkomponente. Vergleiche dazu u. a. das Beispiel 1 von US-A-4 267 107.

Im Hinblick auf diesen Stand der Technik, der immer von Mehrstufenverfahren ausgeht, war es überraschend, daß die Farbstoffe der Formel I im sogenannten »Eintopfverfahren«, d. h. ohne Isolierung von Zwischenstufen zugänglich waren. So sollte beispielsweise die Reaktionsstufe der Umsetzung mit dem Diamin (III) zumal bei überschüssigem Diamin in Konkurrenz treten mit der Umsetzung mit dem Triazin(V) und dabei die für die jeweiligen Substituenten vorgesehenen Bindungsstellen blockieren. Umso überraschender ist es, daß im Gegenteil die nach dem erfindungsgemäßen Verfahren hergestellten Farbstoffe in reinerer Form (d. h. praktisch ohne Nebenprodukte) anfallen und für das Druckverfahren besser geeignet sind als die identischen nach dem Mehrstufenverfahren gemäß US-A-4 267 107 hergestellten Farbstoffen.

Es wurde nun gefunden, daß man Farbstoffe der Formel (I), in welcher die Substituenten $R_1$, $R_2$, $R_3$, $R_4$, $R_5$, $R_6$, B, X, sowie Pc, a, b, c die oben angegebene Bedeutung besitzen, ohne Isolierung von Zwischenstufen herstellen kann, indem man nacheinander ein Phthalocyanin-Sulfochlorid der Formel

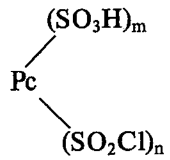

(II)

worin

Pc die oben angegebene Bedeutung besitzt,
m für 0 bis 2 und
n für 2 bis 4 steht,

und wobei die Summe (m+n) die Zahl 4 nicht übersteigen soll, mit einer Verbindung der Formel

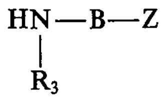

(III)

in welcher Z für $NHR_4$, NHY oder $NO_2$ steht, gegebenenfalls unter Zusatz eines Amins der Formel

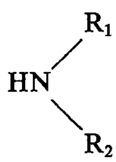

(IV)

wobei B, $R_1$, $R_2$, $R_3$ und $R_4$ die oben angegebene Bedeutung besitzen, Y für eine abspaltbare Aminoschutzgruppe steht, umsetzt und anschließend, falls Z für NH−Y steht, die Aminoschutzgruppe Y abspaltet oder anschließend falls Z für $NO_2$ steht, die $NO_2$-Gruppe zur Aminogruppe reduziert, und anschließend entweder mit einer Reaktivkomponente der Formel

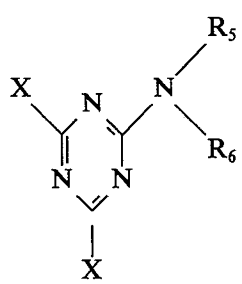

(V)

in welcher $R_5$ und $R_6$ die oben angegebene Bedeutung besitzen und X für Fluor oder Chlor steht, oder mit Trifluor- oder Trichlortriazin als einer Komponente und anschließend mit einem Amin der Formel

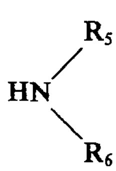

(VI)

in welcher $R_5$ und $R_6$ die oben angegebene Bedeutung besitzen, als der zweiten Komponente, umsetzt und die Reaktionsprodukte, deren freie Säuren der Formel (I) entsprechen, nach an sich bekannten Methoden isoliert.

Farbstoffe der Formel (I) konnten bislang nur durch einen mehrstufigen und unter Isolierung von Zwischenstufen erfolgenden Herstellungsprozeß erhalten werden.

Es ist deshalb als außergewöhnlich überraschend anzusehen, daß man Verbindungen der Formel (I), in einfacher Art und Weise ohne Isolierung von Zwischenstufen und in hoher Reinheit mit Hilfe einer Eintopfreaktion erhalten kann.

In den Farbstoffen der Formel (I) ist jede Sulfonsäure- bzw. Sulfonsäureamidgruppe an einen anderen Benzolring des Phthalocyanins in 3- oder 4-Stellung gebunden.

Die Reste $R_1$ und $R_2$, $R_3$ und $R_4$, sowie $R_5$ und $R_6$ können gleich oder verschieden sein.

Als Beispiele von gegebenenfalls substituierten Alkylresten $R_1$ und $R_2$ seien genannt: gegebenenfalls durch OH, COOH, $SO_3H$ substituierte $C_1-C_5$-Alkylreste wie Methyl, Ethyl, Propyl, Butyl und Amyl, $\beta$-Hydroxyethyl und $\beta$-Hydroxypropyl, $\beta$-Carboxyethyl und $\beta$-Sulfoethyl. Als Beispiele für

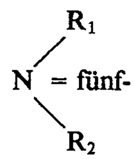 = fünf- oder sechsgliedriger heterocyclischer Ring

seien genannt: Piperidino, Morpholino, Pyrrolidino, Succinimido.

Beispiele für gegebenenfalls substituierte Alkylreste $R_3$ und $R_4$ sind gegebenenfalls durch OH, COOH, $SO_3H$, substituierte $C_1-C_5$-Alkylreste, wie Methyl-, Ethyl- und Propylreste, $\beta$-Hydroxyethyl und $\beta$-Hydroxypropyl.

Die organischen Reste $R_5$, $R_6$ stehen bevorzugt für gegebenenfalls substituiertes Alkyl, Cycloalkyl oder Aralkyl, gegebenenfalls substituiertes Aryl oder die Reste $R_5$ und $R_6$ bilden zusammen mit den durch sie eingeschlossenen Stickstoffatom einen heterocyclischen 5- oder 6-gliedrigen Ring.

Beispiele für die Reste $R_5$ und $R_6$ sind: Wasserstoff, $C_1-C_5$-Alkylreste, wie Methyl, Ethyl, Propyl, Butyl, Isobutyl und Amyl; durch OH, Alkoxy ($C_1-C_4$), COOH, $SO_3H$, substituierte $C_1-C_5$-Alkylreste wie $\beta$-Hydroxyethyl, $\gamma$-Hydroxypropyl, $\beta$-Methoxyethyl, $\gamma$-Methoxypropyl, $\beta$-Ethoxyethyl, $\gamma$-Ethoxypropyl, Carboxymethyl, $\beta$-Carboxyethyl, $\beta$-Sulfoethyl, gegebenenfalls durch Alkyl($C_1-C_4$)-substituierte Cycloalkylreste wie Cyclohexyl, 2-Methylcyclohexyl, 3-Methylcyclohexyl, 4-Methylcyclohexyl; Aralkylreste wie Benzyl, $\beta$-Phenylethyl; Arylreste wie Phenyl, 2-Naphthyl; durch Alkyl($C_1-C_4$), Halogen, Alkoxy($C_1-C_4$), $NO_2$, Acyl($C_1-C_4$), COOH, $SO_3H$ substituierte Arylreste wie 3-Methylphenyl, 4-Methylphenyl, 3,4-Dimethylphenyl, 3,5-Dimethylphenyl, 3-Ethylphenyl, 3-Chlorphenyl, 4-Chlorphenyl, 3,4-Dichlorphenyl; 3,5-Dichlorphenyl, 4-Methyl-3-chlorphenyl, 3-Methoxyphenyl, 4-Methoxyphenyl, 3-Ethoxyphenyl, 4-Ethoxyphenyl, 3-Nitrophenyl, 4-Nitrophenyl, 3-Acetylaminophenyl, 2-Carboxyphenyl, 3-Carboxyphenyl, 4-Carboxyphenyl, 2-Sulfophenyl, 3-Sulfophenyl, 4-Sulfophenyl, 2,5-Disulfophenyl, 3-Methyl-4-sulfo-phenyl, 3-Sulfo-4-methyl-phenyl.

Beispiele bei denen $R_5$ und $R_6$ gemeinsam mit N einen heterocyclischen Ring bilden sind u. a. gegeben, wenn $R_5$ und $R_6$ gemeinsam die Tetra- oder Pentamethylen-Gruppe oder die Gruppierung $-(CH_2)_2-O-(CH_2)_2-$ bedeuten.

Die aromatischen und aliphatischen Brückenglieder B sind vorzugsweise durch folgende Reste substituiert: $SO_3H$, COOH, Alkyl($C_1-C_4$).

Als Beispiele für das Brückenglied B seien genannt: gegebenenfalls durch Alkyl($C_1-C_4$), COOH, $SO_3H$ substituierte Alkylen- und Phenylenbrücke wie Ethylen, 1,2-Phenylen, 1,3-Phenylen, 1,4-Phenylen, 4-Methyl-1,2-phenylen, 2-Methyl-1,3-phenylen, 4-Methyl-1,3-phenylen, 2-Methyl-1,4-phenylen, 4-Carboxy-1,3-phenylen, 5-Carboxy-1,3-phenylen, 6-Carboxy-1,4-phenylen, 4-Sulfo-1,3-phenylen, 4-Sulfo-6-methyl-1,3-phenylen, 5-Sulfo-2-methyl-1,3-phenylen, 2-Sulfo-1,4-phenylen, gegebenenfalls durch Alkyl($C_1-C_4$), COOH, $SO_3H$ substituierte Biphenylen- und Naphthylenbrücken wie 3-Sulfo-4,4'-biphenylen, 4,4'-Biphenylen, 5-Sulfo-1,3-naphthylen, 8-Sulfo-1,3-naphthylen, 6-Sulfo-1,4-naphthylen sowie durch NHCO-Gruppen unterbrochene und gegebenenfalls durch $SO_3H$, COOH oder Alkyl ($C_1-C_4$) substituierte Biphenylengruppen, wie z. B.

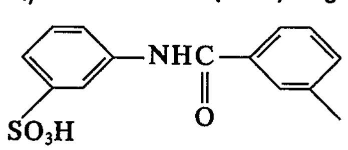 und 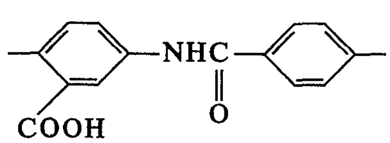

In Abhängigkeit von der Art des verwendeten Amins (III) wird bis zur Umsetzung mit der Reaktivkomponente nach drei unterschiedlichen Varianten verfahren.

Variante 1

Bei Verwendung von Diaminen der Formel (III) (wobei Z=NH−$R_4$) werden bevorzugt solche Verbindungen eingesetzt, deren Aminogruppen unterschiedliche Reaktivität gegenüber Phthalocyaninsulfochloriden aufweisen. Insbesondere bevorzugt sind Diamine, die in benachbarter Stellung zu einer Aminogruppe eine $SO_3H$ oder COOH-Gruppe aufweisen.

Die Umsetzung von einem Sulfochlorid der Formel (II) mit einem Amin der Formel (III) gegebenenfalls in Gegenwart von Aminen der Formel (IV) erfolgt bei Temperaturen von 10−40°C (vorzugsweise 20−30°C) im pH-Bereich 8−10 (vorzugsweise 8,5−9), falls b>0, oder im pH-Bereich 6−11 (vorzugsweise 7−8), falls b=0. Die anschließende Umsetzung mit der Reaktivkomponente (V) bzw. mit Trifluor- oder Trichlortriazin und nachfolgend mit einem Nucleophil der Formel (VI) führt direkt zum Farbstoff (I). Die Umsetzung mit Trichlortriazin erfolgt bei pH 4−8 (vorzugsweise (5,5−6), diejenige mit Trifluortriazin bei pH 3−5 (vorzugsweise 3,5−4).

Hierfür geeignete Diamine der Formel (III), welche Aminogruppen unterschiedlicher Reaktivität enthalten, sind z. B. 2-(2-Aminoethylamino)ethanol, 2,4-Diaminobenzol-sulfonsäure, 2,5-Diaminobenzol-sulfonsäure, 4,6-Diaminotoluol-3-sulfonsäure, 4,4'-Diaminodiphenyl-3-sulfonsäure, 6,8-Diaminonaphthalin-1-sulfonsäure, 2,4-Diaminobenzolcarbonsäure, 2,5-Diaminobenzol-carbonsäure, 2-Amino-5[(3-aminobenzoyl)amino]-benzol-sulfonsäure und 2-Amino-5-[(4-aminobenzoyl)amino]benzol-carbonsäure.

Falls Amine der Formel (VI) hinzugefügt werden, arbeitet man im Falle eines aromatischen Amins (VI) bei pH 5−10, vorzugsweise bei pH 6−6,5, im Falle eines aliphatischen Amins (VI) oder im Falle von Ammoniak bei pH 9−12, vorzugsweise bei pH 10−11.

Variante 2

Bei Verwendung von halbseitig geschützten Diaminen der Formel (III) (wobei Z=NH−Y) wird nach Umsetzung mit einem Phthalocyanin-sulfonsäurechlorid der Formel (II), gegebenenfalls in Gegenwart von Aminen der Formel (VI), die Schutzgruppe sauer oder alkalisch abgespalten. Die weitere Umsetzung erfolgt wie bei Variante 1, wobei auch die dort angegebenen Verfahrensbedingungen gelten.

Als Aminoschutzgruppen Y kommen vorzugsweise in Frage: Acylgruppe, wie Acetyl, Formyl oder Oxalyl. Für die Variante 2 geeignete Amine der Formel (III) sind zum Beispiel 2-Acetylamino-1-aminoethan, 2-Acetylamino-1-aminobenzol, 3-Acetyl-amino-4-aminotoluol, 3-Acetylamino-1-aminobenzol, 1-Acetylamino-4-aminotoluol, 4-Acetylamino-2-aminotoluol, 4-Acetylamino-1-aminobenzol, 5-Acetylamino-2-aminotoluol, 4-Acetylmethylamino-1-aminobenzol, 4-Acetylethylamino-1-aminobenzol, 4-Acetylcyclohexylamino-1-aminobenzol, 4'-Acetylamino-4-biphenyl, 2-Acetamino-4-aminobenzoesäure, 4-Acetamino-2-aminobenzoesäure, 5-Acetamino-3-aminobenzoesäure, 6-Acetylamino-2-aminotoluol-4-sulfonsäure, 4'-Acetylamino-4-amino-biphenyl-2-sulfonsäure und 5-Acetylamino-8-aminonapthalin-2-sulfonsäure. Anstelle der Acetylamino-Verbindungen lassen sich ebenso die Formylamino- und die Oxalylamino-Verbindungen einsetzen.

Variante 3

Bei Verwendung von Aminonitroverbindungen der Formel (III) (wobei Z=$NO_2$) wird nach Umsetzung mit einem Phthalocyaninsulfonsäurechlorid der Formel (II), gegebenenfalls in Gegenwart von Aminen der Formel (IV), die Nitrogruppe zur Aminogruppe reduziert. Die weitere Umsetzung erfolgt wie bei Variante 1, wobei auch die dort angegebenen Verfahrensbedingungen gelten.

Hierfür geeignete Amine der Formel (III) mit Z=$NO_2$ sind zum Beispiel 3-Nitroanilin, 2-Methyl-5-nitroanilin, N,N-Di-methyl-5-nitroanilin, N-Ethyl-2-methyl-5-nitroanilin, 2-Methyl-3-nitroanilin, 4-Methyl-3-nitroanilin, 2,4-Dimethyl-5-nitroanilin, 3-Amino-5-nitrobenzoesäure, 3-Amino-4-methyl-5-nitrobenzolsulfonsäure und 7-Amino-5-nitronaphthalin-1-sulfonsäure.

Phthalocyaninsulfochloride bzw. Phthalocyaninsulfochlorid-sulfonsäuren der Formel (II) können dadurch erhalten werden, daß man das entsprechende Phthalocyanin oder die Phthalocyaninsulfonsäure mit Chlorsulfonsäure und gegebenenfalls einen Säurehalogenid, wie Thionylchlorid, Phosphorpentachlorid, Phosphoroxychlorid oder Phosphortrichlorid wie in den britischen Patentschriften GB-A-708 543, 784 834 und 785 629 und in der US-Patentschrift US-A-2 219 330 beschrieben, behandelt.

Es können einheitliche Phthalocyaninfarbstoffe verwendet werden, das sind solche, in denen die Buchstaben a, b und c die bei der Formel I angegebenen Zahlen charakterisieren. Darüber hinaus können aber auch Gemische dieser Farbstoffe verwendet werden. Bisweilen zeigen derartige Gemische bezüglich Löslichkeit und Substantivität besondere Vorteile. In solchen Mischungen variieren die Zahlen im gemittelten Wert.

Derartige Gemische werden beispielsweise aus zwei oder mehreren, jeweils einheitlichen

Endfarbstoffen der Formel (I) oder besonders vorteilhaft durch Verwendung eines Gemisches der Ausgangskomponenten hergestellt. Letzteres entsteht häufig zwangsläufig, da die Phthalocyaninsulfonsäurechloridsulfonsäuren (II) bezüglich Sulfierungsgrad und ihres Verhältnisses von Sulfonsäurechloridgruppen und Sulfonsäuregruppen häufig technisch als Gemische anfallen.

Gegenüber den bekannt gewordenen Verfahren zur Herstellung von Farbstoffen der Formel (I), die in mehreren getrennten Arbeitsgängen ablaufen, hat das erfindungsgemäße Verfahren insbesondere Vorteile durch Einsparung von Energie und Arbeitszeit, da das arbeitsintensive Filtrieren und Waschen der Zwischenprodukte fortfällt.

Die Verbindungen der Formel (I) sind wertvolle Produkte, die sich für verschiedene Anwendungszwecke eignen.

Als wasserlösliche Verbindungen finden sie Interesse für das Färben und Bedrucken hydroxylgruppenhaltiger und stickstoffhaltiger Textilmaterialien, insbesondere von Textilmaterialien aus nativer und regenerierter Cellulose, ferner aus Wolle, Seide, synthetischen Polyamid- und Polyurethanfasern. Sie eignen sich besonders als Reaktivfarbstoffe zum Färben und Bedrucken von Cellulosematerialien nach den hierfür in neuerer Zeit bekanntgewordenen Techniken. Die erhaltenen Echtheiten, insbesondere Naßechteheiten, sind ausgezeichnet.

## Beispiel 1

In 500 g Eis und 250 ml Wasser werden 0,2 Mol Kupferphthalocyanin-tetrasulfonsäurechlorid (feuchte Paste, ~30%ig) angeschlagen und neutralisiert. Nach Zugabe von 67,7 g 2,4-Diaminobenzolsulfonsäure und 15,1 ml Ammoniak (25%) wird ein pH-Wert von 8,5–9,0 eingestellt und unter Einhalten dieses pH-Wertes mit Natronlauge (10%) in 1 h auf 20° C aufgewärmt. Es wird 6 h bei 20° C, 2 h bei 30° und 1 h bei 40°C und pH 8,5–9 gehalten und schließlich bis zum Ende des NaOH-Verbrauchs bei 60° C und pH 10 gerührt.

Zum auf 20° C abgekühlten, neutralisierten Reaktionsgemisch werden 73,8 g Trichlortriazin gegeben und pH 5,0–5,5 gehalten. Nach Beendigung der Reaktion werden 93,5 g 3-Aminobenzolsulfonsäure zugegeben. Dabei und bis zum Ende der Reaktion wird pH 6,0–6,5 gehalten. Man salzt den Farbstoff mit NaCl aus, saugt ab und wäscht mit verdünnter NaCl-Lösung. Man erhält in praktisch quantitativer Ausbeute einen Farbstoff, der in Form seines Na-Salzes der Formel

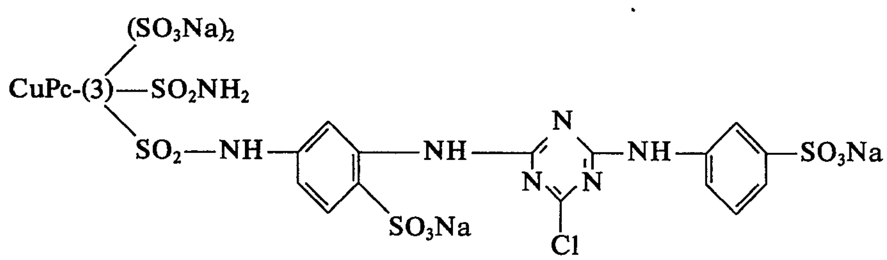

entspricht. Damit läßt sich Baumwolle in türkisfarbenen Ton bedrucken.

Verwendet man anstelle von Kupferphthalocyanin-tetrasulfonsäurechlorid die in Tabelle 1, Spalte 2 aufgeführten Phthalocyaninsulfonsäurechloride und anstelle von 2,4-Diaminobenzolsulfonsäure die in Spalte 3 aufgeführten Diamine und kondensiert, nach Umsetzung mit Trichlortriazin, mit den in Spalte 4 aufgeführten Aminen, so erhält man analog Beispiel 1 gebaute weitere, wertvolle Reaktivfarbstoffe.

**Tabelle 1**

| Nr. | Phthalocyaninsulfonsäurechlorid (II) | Diamin (III) | Amin (VI) |
|---|---|---|---|
| 2 | CuPc-(3)—$(SO_2Cl)_4$ | 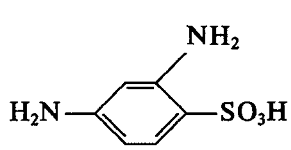 | 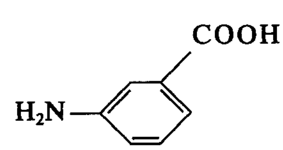 |
| 3 | desgl. | desgl. | 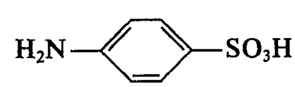 |

Fortsetzung

| Nr. | Phthalocyaninsulfonsäurechlorid (II) | Diamin (III) | Amin (VI) |
|---|---|---|---|
| 4 | 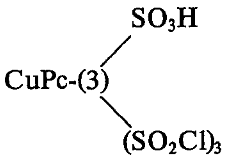 | 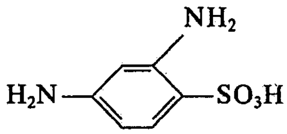 | 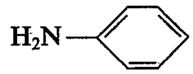 |
| 5 | desgl. | desgl. | 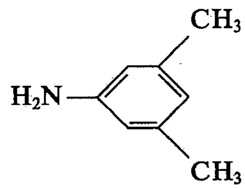 |
| 6 | desgl. | desgl. | 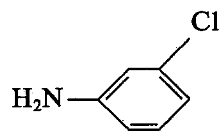 |
| 7 | 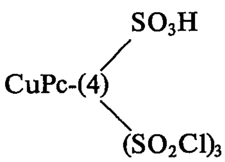 | desgl. | 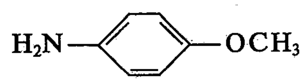 |
| 8 | desgl. | desgl. | 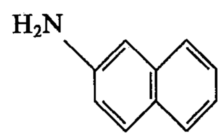 |
| 9 | $CuPc\text{-}(3)\text{—}(SO_2Cl)_3$ | desgl. | 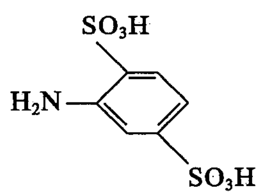 |
| 10 | $CuPc\text{-}(3)\text{—}(SO_2Cl)_4$ | 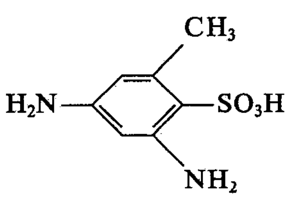 | 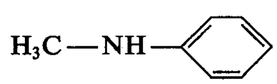 |
| 11 | desgl. | desgl. | 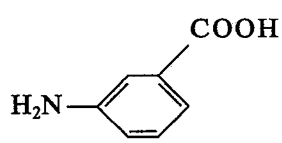 |
| 12 | desgl. | desgl. | 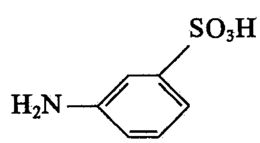 |
| 13 | 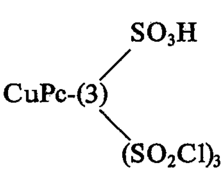 | desgl. | 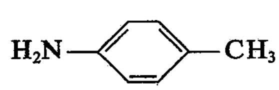 |

Fortsetzung

| Nr. | Phthalocyaninsulfon-säurechlorid (II) | Diamin (III) | Amin (VI) |
|---|---|---|---|
| 14 | 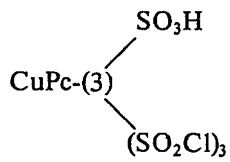 | 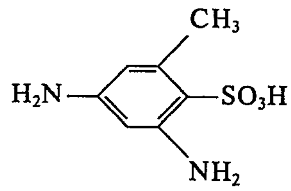 | 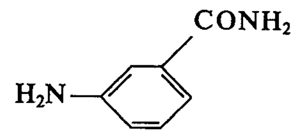 |
| 15 | CuPc-(3)—$(SO_2Cl)_4$ | 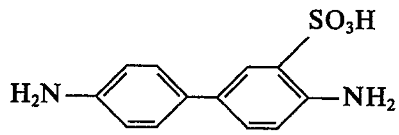 | 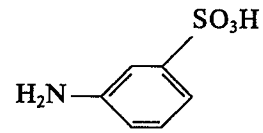 |
| 16 | desgl. | desgl. | 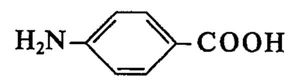 |
| 17 | NiPc-(3)—$(SO_2Cl)_4$ | desgl. | 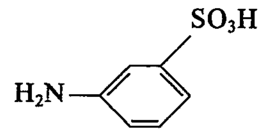 |
| 18 | desgl. | desgl. | 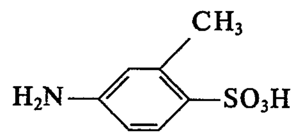 |
| 19 | CuPc-(3)—$(SO_2Cl)_3$ | desgl. | 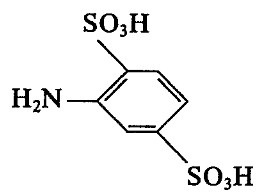 |
| 20 | CuPc-(3)—$(SO_2Cl)_4$ | 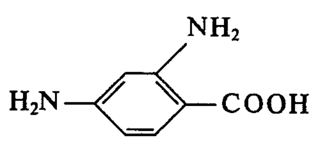 | 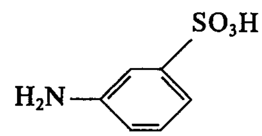 |
| 21 | desgl. | desgl. | 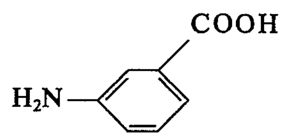 |
| 22 | 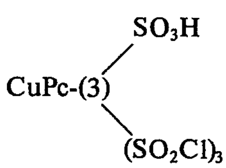 | desgl. | 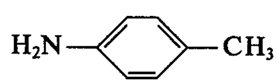 |
| 23 | desgl. | desgl. | 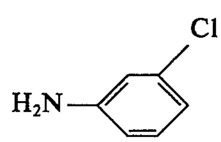 |

Fortsetzung

| Nr. | Phthalocyaninsulfonsäurechlorid (II) | Diamin (III) | Amin (VI) |
|---|---|---|---|
| 24 | CuPc-(3)—$(SO_2Cl)_3$ | 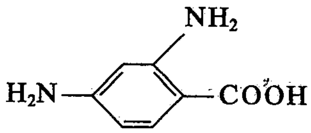 | 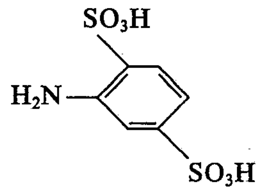 |
| 25 | 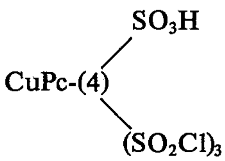 | desgl. | 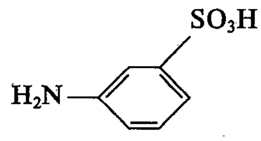 |
| 26 | CuPc-(3)—$(SO_2Cl)_4$ | 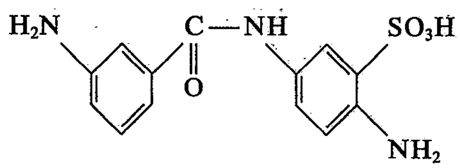 | desgl. |
| 27 | desgl. | desgl. | 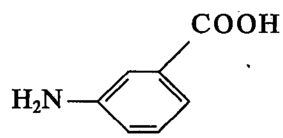 |
| 28 | 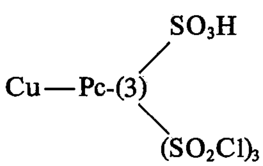 | desgl. | 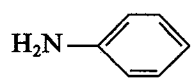 |
| 29 | desgl. | desgl. | 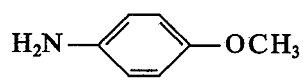 |
| 30 | desgl. | desgl. | 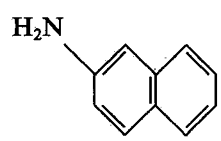 |
| 31 | NiPc-(3)—$(SO_2Cl)_3$ | 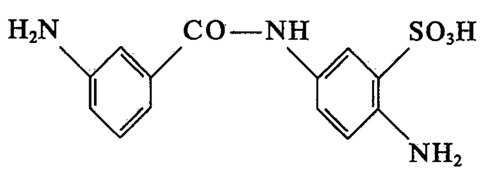 | 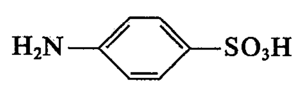 |
| 32 | CuPc-(3)—$(SO_2Cl)_3$ | desgl. | 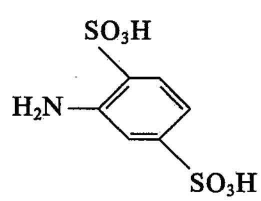 |

## Beispiel 33

Verfährt man wie im Beispiel 1 beschrieben, setzt aber die 2,4-Diamino-benzolsulfonsäure ohne Zusatz von Ammoniak um, so erhält man einen Farbstoff, der in Form seines Natriumsalzes der Formel

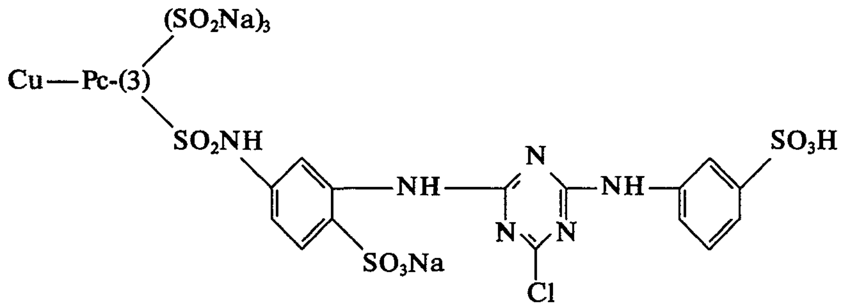

entspricht.

Verwendet man anstelle von Kupferphthalocyanin-tetrasulfonsäurechlorid die in Tabelle 2, Spalte 2, aufgeführten Phthalocyaninsulfonsäurechloride und anstelle von 2,4-Diaminobenzolsulfonsäure die in Spalte 3 aufgeführten Diamine und kondensiert, nach Umsetzung mit Trichlortriazin, mit den in Spalte 4 aufgeführten Aminen, so erhält man analog Beispiel 33 gebaute weitere, wertvolle Reaktivfarbstoffe.

Tabelle 2

| Nr. | Phthalocyaninsulfonsäurechlorid (II) | Diamin (III) | Amin (VI) |
|---|---|---|---|
| 34 | $CuPc\text{-}(3)—(SO_2Cl)_4$ | 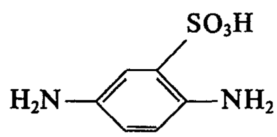 | 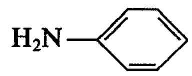 |
| 35 | desgl. | desgl. | 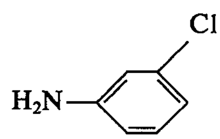 |
| 36 | $NiPc\text{-}(3)—(SO_2Cl)_4$ | desgl. | 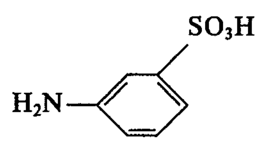 |
| 37 | desgl. | desgl. | 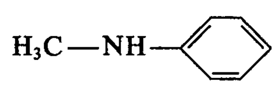 |
| 38 | 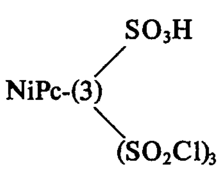 | desgl. | 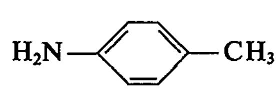 |
| 39 | 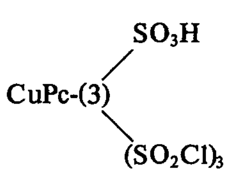 | 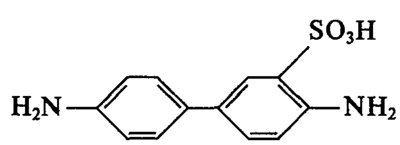 | 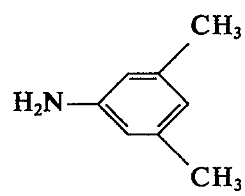 |

Fortsetzung

| Nr. | Phthalocyaninsulfonsäurechlorid (II) | Diamin (III) | Amin (VI) |
|---|---|---|---|
| 40 | NiPc-(3)—$(SO_2Cl)_4$ | 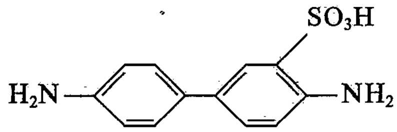 | 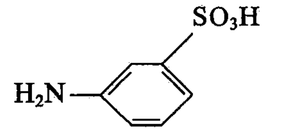 |
| 41 | 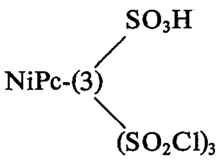 | desgl. | 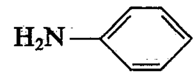 |
| 42 | desgl. | desgl. | 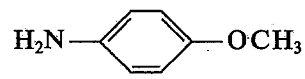 |
| 43 | desgl. | 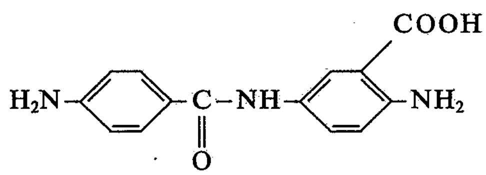 | 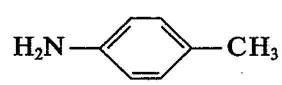 |
| 44 | NiPc-(3)—$(SO_2Cl)_4$ | desgl. | 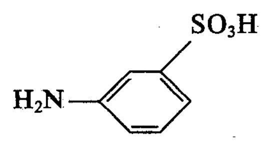 |
| 45 | CuPc-(3)—$(SO_2Cl)_4$ | desgl. | 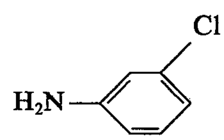 |
| 46 | desgl. | desgl. | 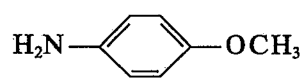 |

Beispiel 47

Verfährt man wie im Beispiel 1 beschrieben, setzt aber nach Kondensation mit Trichlortriazin mit 40,6 ml Ammoniak (25%) bei pH 10,5–11,0 um, so erhält man einen Farbstoff, der in Form seines Natriumsalzes der Formel

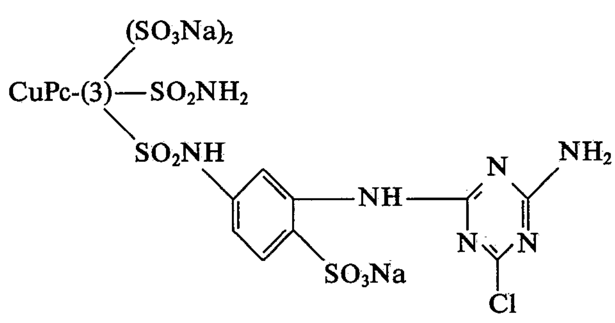

entspricht.

Verwendet man anstelle von Kupferphthalocyanintetrasulfonsäurechlorid die in Tabelle 3, Spalte 2, aufgeführten Phthalocyaninsulfonsäurechloride und anstelle von 2,4-Diaminobenzolsulfonsäure die in

Spalte 3 aufgeführten Diamine und kondensiert, nach Umsetzung mit Trichlortriazin, mit den in Spalte 4 aufgeführten Aminen, so erhält man analog Beispiel 47 gebaute weitere, wertvolle Reaktivfarbstoffe.

Tabelle 3

| Nr. | Phthalocyaninsulfonsäurechlorid (II) | Diamin (III) | Amin (VI) |
|---|---|---|---|
| 48 | CuPc-(3)—$(SO_2Cl)_4$ | 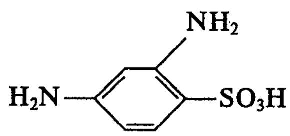 | $H_2N—CH_2COOH$ |
| 49 | desgl. | desgl. | $H_2N—CH_2CH_2—OH$ |
| 50 | desgl. | desgl. | $H_2N—CH_2CH_2SO_3H$ |
| 51 | 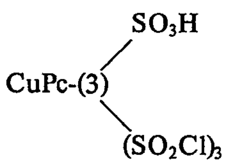 | desgl. | $H_2N-CH_2-CH_2-OCH_3$ |
| 52 | desgl. | desgl. | 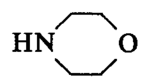 |
| 53 | CuPc-(3)—$(SO_2Cl)_3$ | desgl. | $H_2N—CH_2CH_2—OH$ |
| 54 | desgl. | desgl. | $H_2N—CH_2CH_2—SO_3H$ |
| 55 | 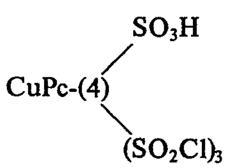 | desgl. | $H_2N—CH_3$ |
| 56 | desgl. | desgl. | $HN(C_2H_5)_2$ |
| 57 | CuPc-(3)—$(SO_2Cl)_4$ | 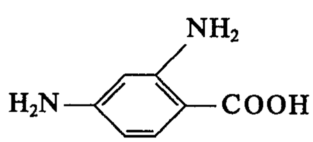 | $NH_3$ |
| 58 | desgl. | desgl. | $H_2NCH_2COOH$ |
| 59 | 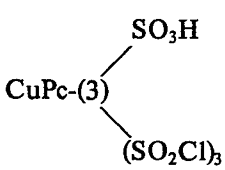 | desgl. | 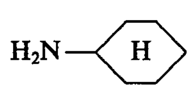 |
| 60 | CuPc-(3)—$(SO_2Cl)_3$ | desgl. | $H_2N—CH_2CH_2—SO_3H$ |

Fortsetzung

| Nr. | Phthalocyaninsulfon-säurechlorid (II) | Diamin (III) | Amin (VI) |
|---|---|---|---|
| 61 | CuPc-(4)—$(SO_2Cl)_4$ | 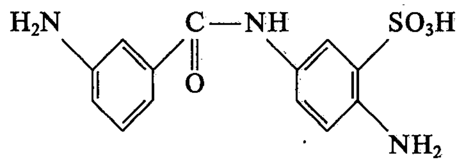 | $H_2N—CH_2CH_2—OH$ |
| 62 | CuPc-(3)—$(SO_2Cl)_4$ | 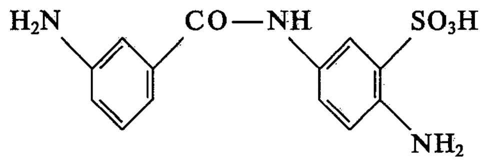 | 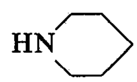 |
| 63 | 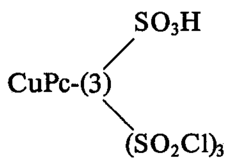 | desgl. | $H_2N—CH_3$ |
| 64 | CuPc-(3)—$(SO_2Cl)_3$ | desgl. | 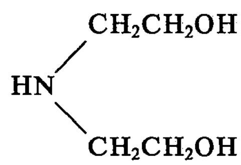 |
| 65 | NiPc-(3)—$(SO_2Cl)_4$ | desgl. | $NH_3$ |

Beispiel 66

Verfährt man wie im Beispiel 47 beschrieben, setzt aber die 2,4-Diaminobenzolsulfonsäure ohne Zusatz von Ammoniak um, so erhält man einen Farbstoff, der in Form seines Natriumsalzes der Formel

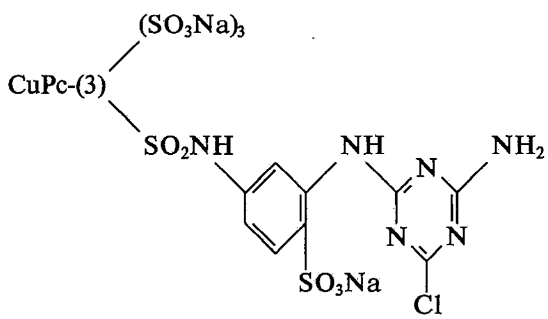

entspricht.

Verwendet man anstelle von Kupferphthalocyanintetrasulfonsäurechlorid die in Tabelle 4, Spalte 2, aufgeführten Phthalocyaninsulfonsäurechloride und anstelle von 2,4-Diaminobenzolsulfonsäure die in Spalte 3 aufgeführten Diamine und kondensiert, nach Umsetzung mit Trichlortriazin, mit den in Spalte 4 aufgeführten Aminen, so erhält man analog Beispiel 66 gebaute weitere, wertvolle Reaktivfarbstoffe.

Tabelle 4

| Nr. | Phthalocyaninsulfon-säurechlorid (II) | Diamin (III) | Amin (VI) |
|---|---|---|---|
| 67 | CuPc-(3)—$(SO_2Cl)_4$ | 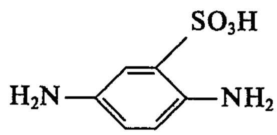 | $H_2N—CH_3$ |
| 68 | desgl. | desgl. | $H_2N—CH_2CH_2—OCH_3$ |
| 69 | NiPc-(3)—$(SO_2Cl)_4$ | desgl. | $NH_3$ |
| 70 | desgl. | desgl. | $H_2N—CH_2CH_2—OH$ |
| 71 | 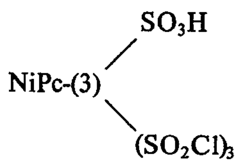 | desgl. | 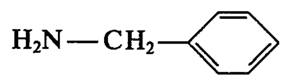 |
| 72 | desgl. | desgl. | $HN(C_2H_5)_2$ |
| 73 | CuPc-(3)—$(SO_2Cl)_3$ | 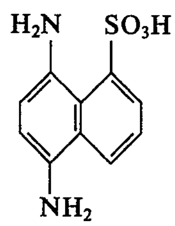 | $H_2N—CH_3$ |
| 74 | desgl. | desgl. | $H_2N—CH_2COOH$ |
| 75 | NiPc-(3)—$(SO_2Cl)_4$ | desgl. | $NH_3$ |
| 76 | desgl. | desgl. | 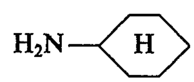 |
| 77 | desgl. | desgl. | $H_3C—NH—CH_2—CH_2OH$ |
| 78 | 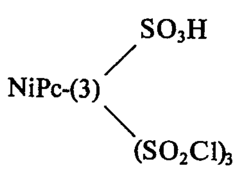 | desgl. | 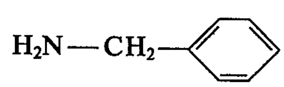 |
| 79 | desgl. | 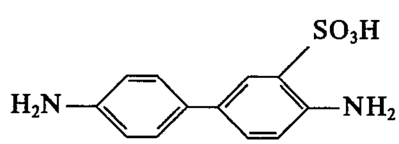 | $NH_3$ |
| 80 | desgl. | desgl. | $H_2N—CH_2CH_2OH$ |
| 81 | CuPc-(3)—$(SO_2Cl)_3$ | 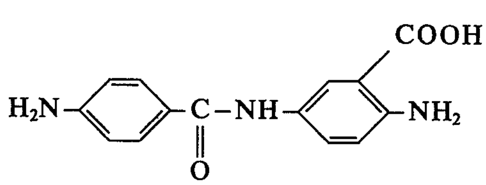 | $H_2N—CH_2CH_2—SO_3H$ |

Fortsetzung

| Nr. | Phthalocyaninsulfonsäurechlorid (II) | Diamin (III) | Amin (VI) |
|---|---|---|---|
| 82 | CuPc-(3)—$(SO_2Cl)_3$ | 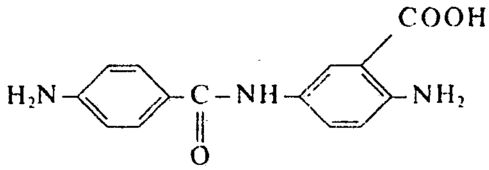 | 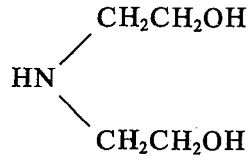 |
| 83 | NiPc-(3)—$(SO_2Cl)_4$ | desgl. | 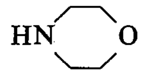 |
| 84 | NiPc-(3)—$(SO_2Cl)_3$ | desgl. | $H_2N—CH_2COOH$ |
| 85 | desgl. | desgl. | $H_2N — CH_2CH_2 — OSO_3H$ |

Beispiel 86

Verfährt man wie im Beispiel 1 beschrieben, setzt aber anstelle von Trichlortriazin Trifluortriazin ein, wobei die Kondensation bei pH 3,5 ± 0,2 durchgeführt wird, so erhält man einen Farbstoff, der in Form seines Natriumsalzes der Formel

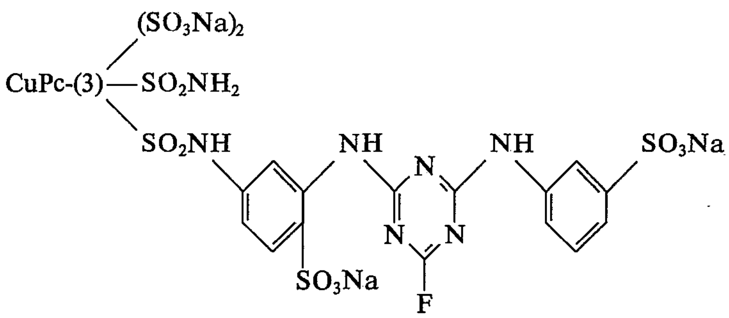

Verwendet man anstelle von Kupferphthalocyanintetrasulfonsäurechlorid die in Tabelle 5, Spalte 2, aufgeführten Phthalocyaninsulfonsäurechloride und anstelle von 2,4-Diaminobenzolsulfonsäure die in Spalte 3 aufgeführten Diamine und kondensiert, nach Umsetzung mit Trifluortriazin, mit den in Spalte 4 aufgeführten Aminen, so erhält man analog Beispiel 86 gebaute weitere, wertvolle Reaktivfarbstoffe.

Tabelle 5

| Nr. | Phthalocyanin-sulfonsäurechlorid (II) | Diamin (III) | Amin (VI) |
|---|---|---|---|
| 87 | CuPc-(3)—$(SO_2Cl)_4$ | 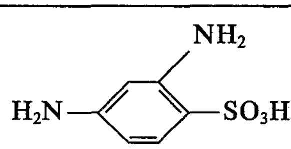 | 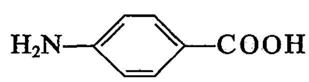 |
| 88 | desgl. | desgl. | 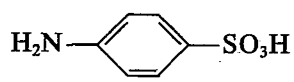 |
| 89 | 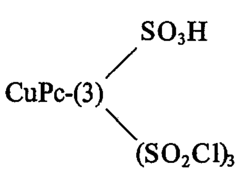 | desgl. | 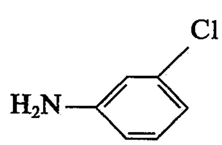 |

Fortsetzung

| Nr. | Phthalocyaninsulfon-säurechlorid (II) | Diamin (III) | Amin (VI) |
|---|---|---|---|
| 90 | 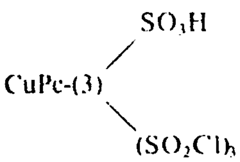 | 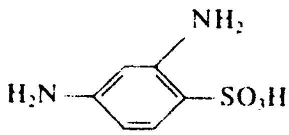 | 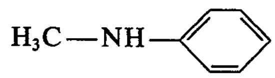 |
| 91 | desgl. | desgl. | 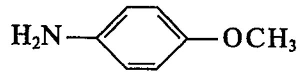 |
| 92 | CuPc-(3)—$(SO_2Cl)_3$ | desgl. | 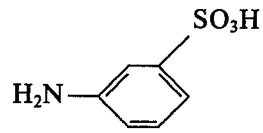 |
| 93 | desgl. | desgl. | 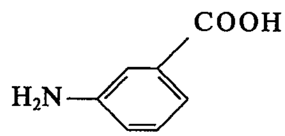 |
| 94 | 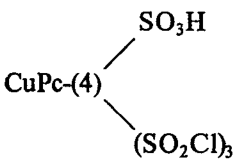 | desgl. | 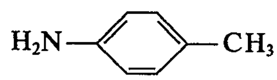 |
| 95 | CuPc-(3)—$(SO_2Cl)_4$ | 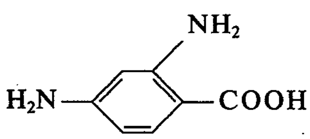 | 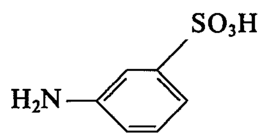 |
| 96 | desgl. | desgl. | 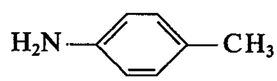 |
| 97 | 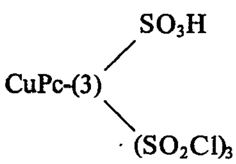 | desgl. | 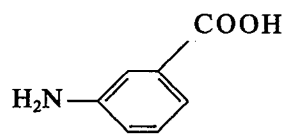 |
| 98 | desgl. | desgl. | 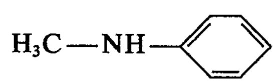 |
| 99 | CuPc-(3)—$(SO_2Cl)_3$ | desgl. | 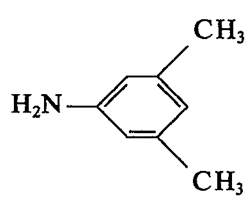 |
| 100 | CuPc-(3)—$(SO_2Cl)_3$ | 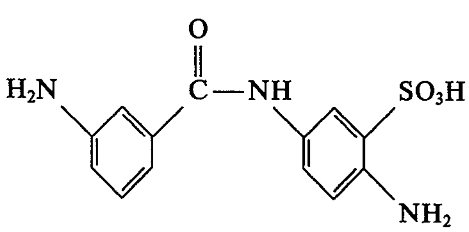 | 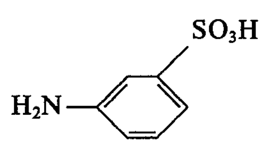 |

Fortsetzung

| Nr. | Phthalocyanin-sulfonsäurechlorid (II) | Diamin (III) | Amin (VI) |
|---|---|---|---|
| 101 | 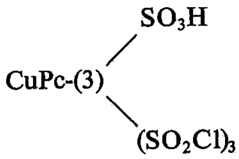 | 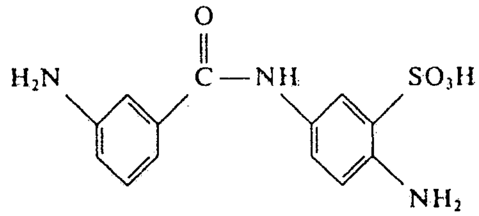 | 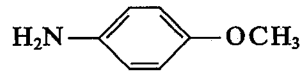 |
| 102 | desgl. | desgl. | 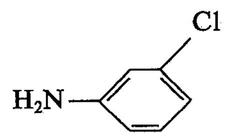 |
| 103 | desgl. | desgl. | 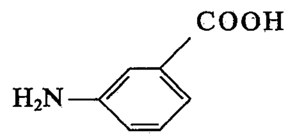 |
| 104 | 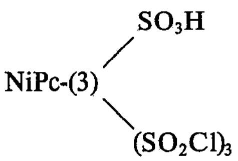 | desgl. | desgl. |

Beispiel 105

Verfährt man wie im Beispiel 86 beschrieben, setzt aber die 2,4-Diaminobenzolsulfonsäure ohne Zusatz von Ammoniak um, so erhält man einen Farbstoff, der in Form seines Natriumsalzes der Formel

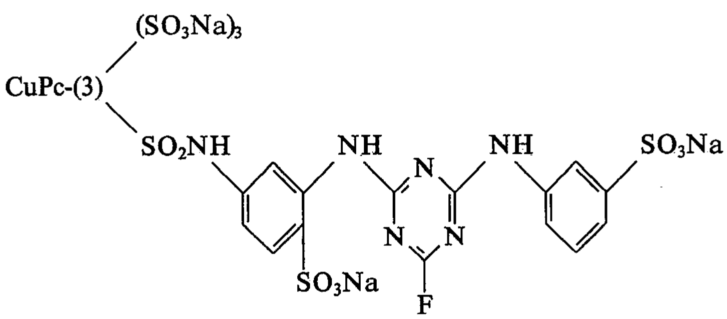

Verwendet man anstelle von Kupferphthalocyanintetrasulfonsäurechlorid die in Tabelle 6, Spalte 2, aufgeführten Phthalocyaninsulfonsäurechloride und anstelle von 2,4-Diaminobenzolsulfonsäure die in Spalte 3 aufgeführten Diamine und kondensiert, nach Umsetzung mit Trifluortriazin, mit den in Spalte 4 aufgeführten Aminen, so erhält man analog Beispiel 105 gebaute weitere, wertvolle Reaktivfarbstoffe.

Tabelle 6

| Nr. | Phthalocyanin-sulfonsäurechlorid (II) | Diamin (III) | Amin (VI) |
|---|---|---|---|
| 106 | $CuPc\text{-}(3)\text{—}(SO_2Cl)_4$ | 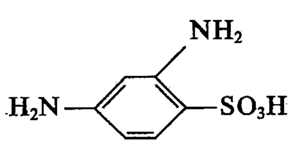 | 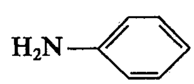 |

Fortsetzung

| Nr. | Phthalocyanin-sulfonsäurechlorid (II) | Diamin (III) | Amin (VI) |
|---|---|---|---|
| 107 | CuPc-(3)—$(SO_2Cl)_4$ | 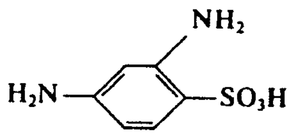 | 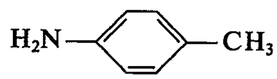 |
| 108 | CuPc-(3)—$(SO_2Cl)_3$ | desgl. | 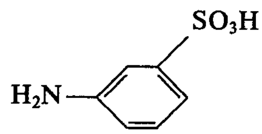 |
| 109 | 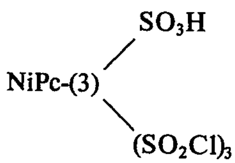 | desgl. | 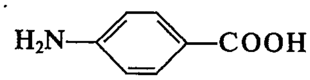 |
| 110 | NiPc-(3)—$(SO_2Cl)_3$ | desgl. | 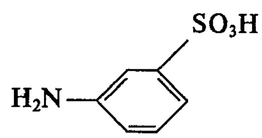 |
| 111 | desgl. | desgl. | 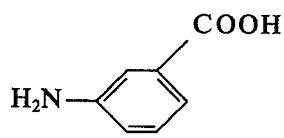 |
| 112 | 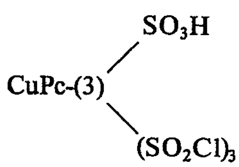 | 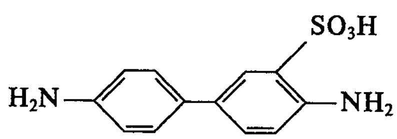 | 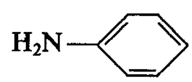 |
| 113 | desgl. | desgl. | 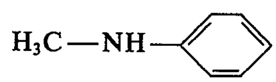 |
| 114 | CuPc-(3)—$(SO_2Cl)_3$ | desgl. | 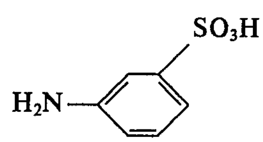 |
| 115 | NiPc-(3)—$(SO_2Cl)_4$ | desgl. | 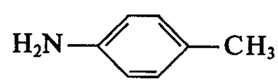 |
| 116 | 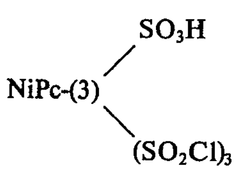 | desgl. | 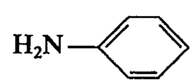 |
| 117 | desgl. | desgl. | 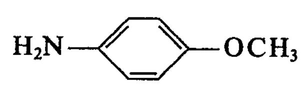 |
| 118 | NiPc-(3)—$(SO_2Cl)_3$ | desgl. | 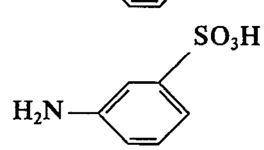 |
| 119 | CuPc-(3)—$(SO_2Cl)_3$ | 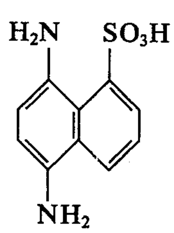 | 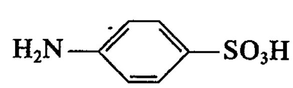 |

Fortsetzung

| Nr. | Phthalocyaninsulfon-säurechlorid (II) | Diamin (III) | Amin (VI) |
|---|---|---|---|
| 120 | 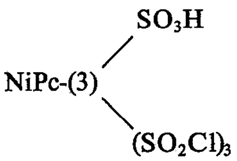 | 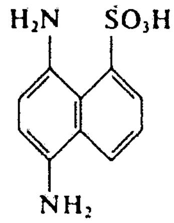 | 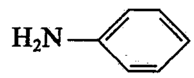 |
| 121 | NiPc-(3)—$(SO_2Cl)_3$ | desgl. | 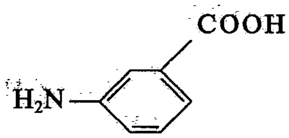 |
| 122 | desgl. | desgl. | 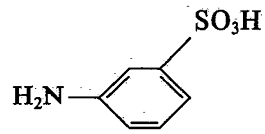 |

Beispiel 123

Verfährt man wie im Beispiel 47 beschrieben, setzt aber anstelle von Trichlortriazin Trifluortriazin ein, wobei die Kondensation bei pH 3,5 ± 0,2 durchgeführt wird, so erhält man einen Farbstoff, der in Form seines Natriumsalzes der Formel

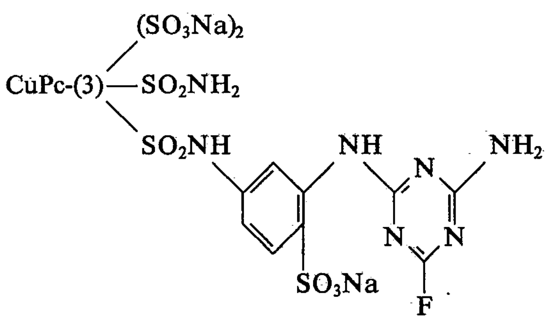

entspricht.

Verwendet man anstelle von Kupferphthalocyanintetrasulfonsäurechlorid die in Tabelle 7, Spalte 2, aufgeführten Phthalocyaninsulfonsäurechloride und anstelle von 2,4-Diaminobenzolsulfonsäure die in Spalte 3 aufgeführten Diamine und kondensiert, nach Umsetzung mit Trifluortriazin, mit den in Spalte 4 aufgeführten Aminen, so erhält man analog Beispiel 123 gebaute weitere, wertvolle Reaktivfarbstoffe.

Tabelle 7

| Nr. | Phthalocyaninsulfon-säurechlorid (II) | Diamin (III) | Amin (VI) |
|---|---|---|---|
| 124 | Cu—Pc-(3)—$(SO_2Cl)_4$ | 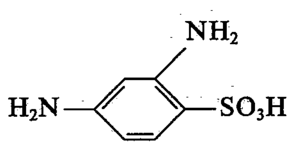 | $H_2N—CH_3$ |
| 125 | desgl. | desgl. | $H_2N—CH_2CH_2—OH$ |

Fortsetzung

| Nr. | Phthalocyaninsulfon-säurechlorid (II) | Diamin (III) | Amin (VI) |
|---|---|---|---|
| 126 | 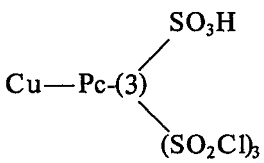 | 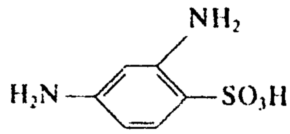 | 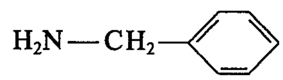 |
| 127 | desgl. | desgl. | $H_2N—CH_2CH_2—OCH_3$ |
| 128 | $CuPc\text{-}(3)—(SO_2Cl)_3$ | desgl. | $H_2N—CH_2COOH$ |
| 129 | $CuPc\text{-}(3)—(SO_2Cl)_4$ | 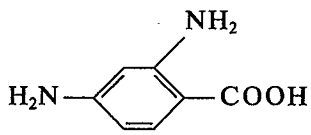 | $NH_3$ |
| 130 | 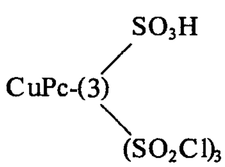 | desgl. | $H_2N—CH_3$ |
| 131 | $CuPc\text{-}(3)—(SO_2Cl)_3$ | desgl. | $H_2N—CH_2CH_2OH$ |
| 132 | desgl. | desgl. | $H_2N—CH_2COOH$ |
| 133 | $CuPc\text{-}(3)—(SO_2Cl)_4$ | 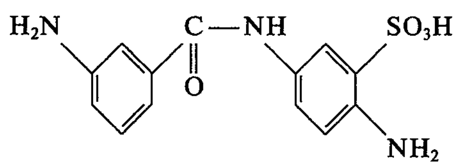 | $H_2N—CH_2CH_2—SO_3H$ |
| 134 | desgl. | desgl. | 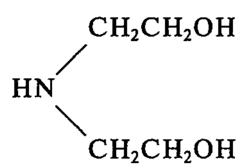 |
| 135 | $CuPc\text{-}(3)—(SO_2Cl)_3$ | desgl. | $NH_3$ |
| 136 | desgl. | desgl. | 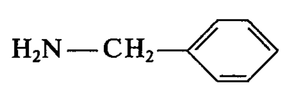 |
| 137 | $NiPc\text{-}(3)—(SO_2Cl)_4$ | desgl. | $H_2N—CH_2CH_2—OH$ |

## Beispiel 138

Verfährt man wie in Beispiel 123 beschrieben, setzt aber die 2,4-Diaminobenzolsulfonsäure ohne Zusatz von Ammoniak um, so erhält man einen Farbstoff, der in Form seines Natriumsalzes der Formel

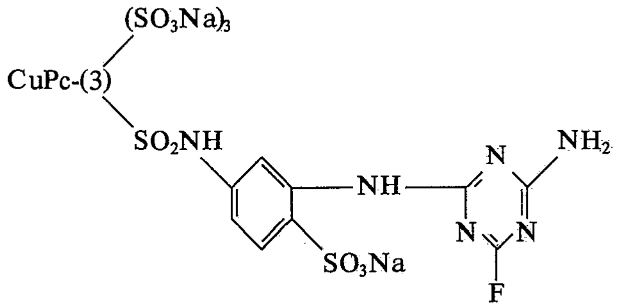

entspricht.

Verwendet man anstelle von Kupferphthalocyanintetrasulfonsäurechlorid die in Tabelle 8, Spalte 2, aufgeführten Phthalocyaninsulfonsäurechloride und anstelle von 2,4-Diaminobenzolsulfonsäure die in Spalte 3 aufgeführten Diamine und kondensiert, nach Umsetzung mit Trifluortriazin, mit den in Spalte 4 aufgeführten Aminen, so erhält man analog Beispiel 138 gebaute weitere, wertvolle Reaktivfarbstoffe.

Tabelle 8

| Nr. | Phthalocyaninsulfon-säurechlorid (II) | Diamin (III) | Amin (VI) |
|---|---|---|---|
| 139 | $CuPc\text{-}(3)-(SO_2Cl)_4$ | 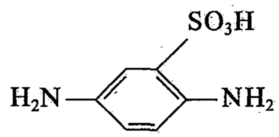 | $NH_3$ |
| 140 | desgl. | desgl. | $H_2N-CH_3$ |
| 141 | $CuPc\text{-}(3)-(SO_2Cl)_3$ | desgl. | $H_2N-CH_2CH_2-OH$ |
| 142 | 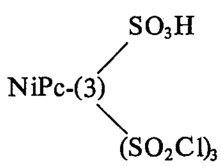 | desgl. | 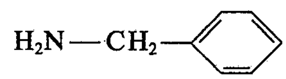 |
| 143 | $NiPc\text{-}(3)-(SO_2Cl)_3$ | desgl. | $H_2N-CH_2COOH$ |
| 144 | $CuPc\text{-}(3)-(SO_2Cl)_4$ | 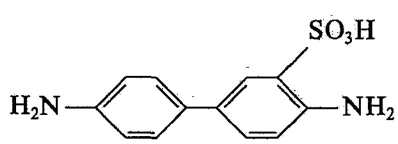 | $NH_3$ |
| 145 | $NiPc\text{-}(3)-(SO_2Cl)_4$ | desgl. | $NH_3$ |
| 146 | 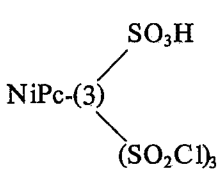 | desgl. | $H_2N-CH_3$ |
| 147 | $NiPc\text{-}(3)-(SO_2Cl)_3$ | desgl. | $H_2N-CH_2CH_2OH$ |

Fortsetzung

| Nr. | Phthalocyaninsulfonsäurechlorid (II) | Diamin (III) | Amin (VI) |
|---|---|---|---|
| 148 | 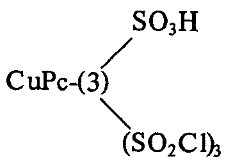 | 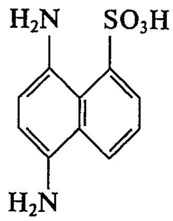 | $NH_3$ |
| 149 | CuPc-(3)—$(SO_2Cl)_3$ | desgl. | $H_2N—CH_2CH_2—SO_3H$ |
| 150 | NiPc-(3)—$(SO_2Cl)_4$ | desgl. | $NH_3$ |
| 151 | desgl. | desgl. | 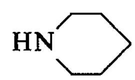 |
| 152 | 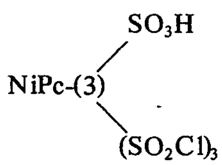 | desgl. | $HN(C_2H_5)_2$ |
| 153 | NiPc-(3)—$(SO_2Cl)_3$ | desgl. | 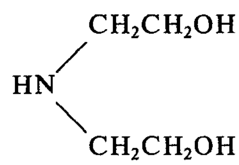 |

**Patentansprüche:**

1. Verfahren zur Herstellung von wasserlöslichen Phthalocyaninfarbstoffen, die in Form ihrer freien Säuren der Formel

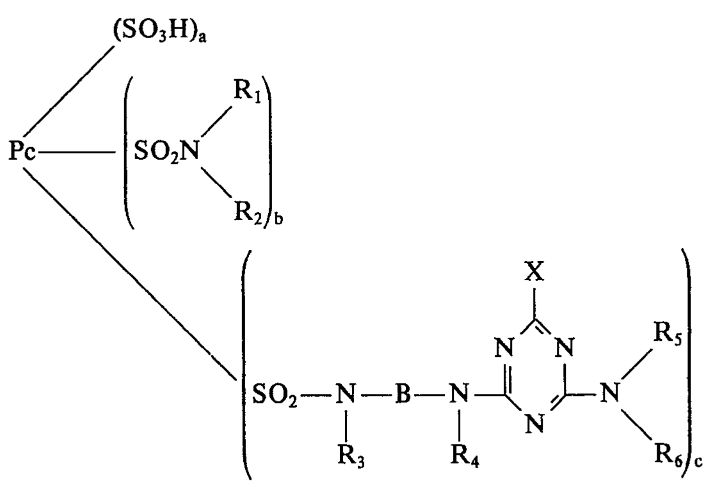

(I)

entsprechen, worin

Pc = Rest eines Kupfer- oder Nickelphthalocyanins
$R_1$, $R_2$ = Wasserstoff, gegebenenfalls substituiertes Alkyl oder worin $R_1$ und $R_2$ zusammen mit dem durch sie eingeschlossenen Stickstoffatomen einen fünf- oder sechsgliedrigen heterocyclischen Ring bilden und worin
$R_3$, $R_4$ = Wasserstoff oder gegebenenfalls substituierten Alkyl
B = gegebenenfalls substituiertes aromatisches oder aliphatisches Brückenglied
$R_5$, $R_6$ = Wasserstoff oder organischer Rest oder worin $R_5$ und $R_6$ zusammen mit dem durch sie eingeschlossenen Stickstoffatom einen gegebenenfalls weitere Heteroatome enthaltenden heterocyclischen Ring bilden,

und wobei

X = Fluor oder Chlor

und wobei

a = 1 bis 3
b = 0 bis 2
c = 1 oder 2 bedeuten,

und wobei die Summe (a + b + c) die Zahl 4 nicht übersteigt,
dadurch gekennzeichnet, daß man ohne Isolierung von Zwischenstufen nacheinander ein Phthalocyanin-Sulfochlorid der Formel

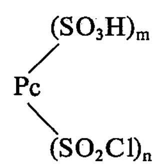

(II)

worin

Pc die oben angegebene Bedeutung besitzt,
m für 0 bis 2 und
n für 2 bis 4 steht,

wobei die Summe (m + n) die Zahl 4 nicht übersteigt, mit einer Verbindung der Formel

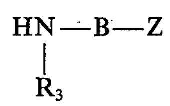

(III)

in welcher Z für $NHR_4$, NHY oder $NO_2$ steht, gegebenenfalls unter Zusatz eines Amins der Formel

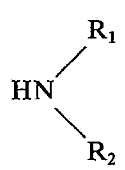

(IV)

wobei B, $R_1$, $R_2$, $R_3$ und $R_4$ die oben angegebene Bedeutung besitzen, Y für eine abspaltbare Aminoschutzgruppe steht,
umsetzt und anschließend, falls Z für NHY steht, die Aminoschutzgruppe Y abspaltet, oder anschließend, falls Z für $NO_2$ steht, die $NO_2$-Gruppe zur Aminogruppe reduziert
und anschließend entweder mit einer Reaktivkomponente der Formel

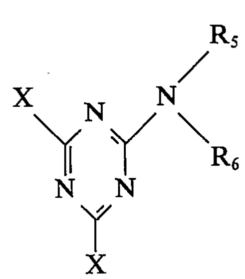

(V)

in welcher $R_5$ und $R_6$ die oben angegebene Bedeutung besitzen und X für Fluor oder Chlor steht oder mit Trifluor- oder Trichlortriazin als einer Komponente und anschließend mit einem Amin der Formel

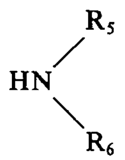

(VI)

in welcher $R_5$ und $R_6$ die oben angegebene Bedeutung besitzen, als der zweiten Komponente, umsetzt.

2. Verfahren gemäß Anspruch 1, dadurch gekennzeichnet, daß man als Verbindung der Formel (III) die Verbindung

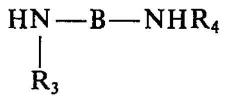

einsetzt, wobei B, $R_3$ und $R_4$ die in Anspruch 1 angegebene Bedeutung besitzen.

3. Verfahren gemäß Anspruch 2, dadurch gekennzeichnet, daß in den Formeln (III) und (IV) $R_1$, $R_2$, $R_3$ und $R_4$ für Wasserstoff, Methyl oder Ethyl stehen.

4. Verfahren nach Anspruch 2, dadurch gekennzeichnet, daß man als Verbindungen der Formel (III) gegebenenfalls durch Alkyl($C_1-C_4$) substituierte Diaminobenzol-Verbindungen einsetzt, die in ortho-Position zur einen Aminogruppe eine Carboxyl- oder Sulfonsäure-Gruppe tragen.

5. Verfahren gemäß den Ansprüchen 1 bis 4, dadurch gekennzeichnet, daß man als Amin der Formel VI Ammoniak, Methylamin, $\beta$-Hydroxyethylamin, gegebenenfalls durch Halogen, COOH, $SO_3H$, $SO_3H$, Alkyl($C_1-C_4$), Alkoxy ($C_1C_4$), $CONH_2$ substituiertes Anilin einsetzt.

## Claims

1. Process for the preparation of water-soluble phthalocyanine dyestuffs which, in the form of their free acids, correspond to the formula

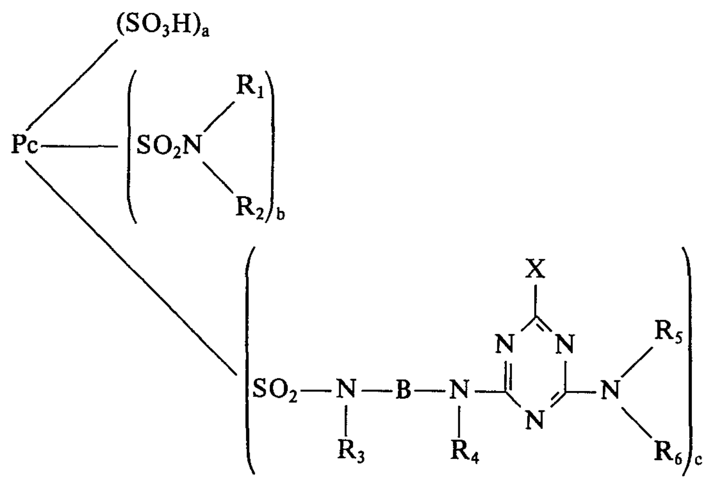

(I)

wherein

Pc = the radical of a copper phthalocyanine or nickel phthalocyanine,
$R_1$ and $R_2$ = hydrogen or optionally substituted alkyl, or wherein $R_1$ and $R_2$, together with the nitrogen atom between them, form a five-membered or six-membered heterocyclic ring, and wherein
$R_3$ and $R_4$ = hydrogen or optionally substituted alkyl,
B = an optionally substituted aromatic or aliphatic bridge member,
$R_5$ and $R_6$ = hydrogen or an organic radical, or wherein $R_5$ and $R_6$, together with the nitrogen atom between them, form a heterocyclic ring which optionally contains further hetero-atoms,

and wherein

X = fluorine or chlorine,

and wherein

a = 1 to 3,
b = 0 to 2 and
c = 1 or 2,

and wherein the sum (a + b + c) does not exceed the number 4, characterised in that, successively and without isolating intermediate stages, a phthalocyanine-sulphonic acid chloride of the formula

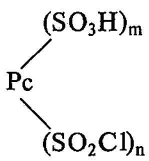

(II)

wherein

Pc has the abovementioned meaning,
m represents 0 to 2 and
n represents 2 to 4,

and wherein the sum (m + n) does not exceed the number 4, is reacted with a compound of the formula

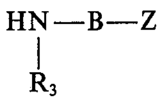

(III)

in which Z represents $NHR_4$, NHY or $NO_2$, if appropriate with the addition of an amine of the formula

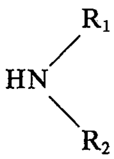

(IV)

wherein B, $R_1$, $R_2$, $R_3$ and $R_4$ have the meaning indicated above and Y represents an amino-protective group which can be split off,
and then, if Z represents NHY, the amino-protective group Y is split off, or, if Z represents $NO_2$, the $NO_2$ group is then reduced to the amino group, and the product is subsequently reacted either with a reactive component of the formula

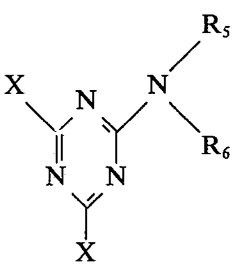

(V)

in which $R_5$ and $R_6$ have the abovementioned meaning and X represents fluorine or chlorine, or with trifluoro- or trichloro-triazine as one component and then with an amine of the formula

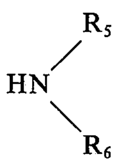

(VI)

in which $R_5$ and $R_6$ have the abovementioned meaning, as the second component.

2. Process according to Claim 1, characterised in that the compound

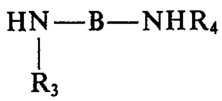

wherein B, $R_3$ and $R_4$ have the meaning given in clism 1, is employed as the compound of the formula (III).

3. Process according to claim 2, characterised in that, in the formulae (III) and (IV), $R_1$, $R_2$, $R_3$ and $R_4$ represent hydrogen, methyl or ethyl.

4. Process according to claim 2, characterised in that diaminobenzene compounds which are optionally substituted by $C_1-C_4$-alkyl and carry a carboxyl group or sulphonic acid group in the ortho-position relative to one amino group are employed as compounds of the formula (III).

5. Process according to claims 1 to 4, characterised in that ammonia, methylamine, $\beta$-hydroxyethylamine or aniline which is optionally substituted by halogen, COOH, $SO_3H$, $SO_3H$, $C_1-C_4$-alkyl, $C_1-C_4$-alkoxy or $CONH_2$ is employed as the amine of the formula (VI).

**Revendications**

1. Procédé de production de colorants hydrosolubles du type phthalocyanine qui, sous la forme de leurs acides libres, répondent à la formule

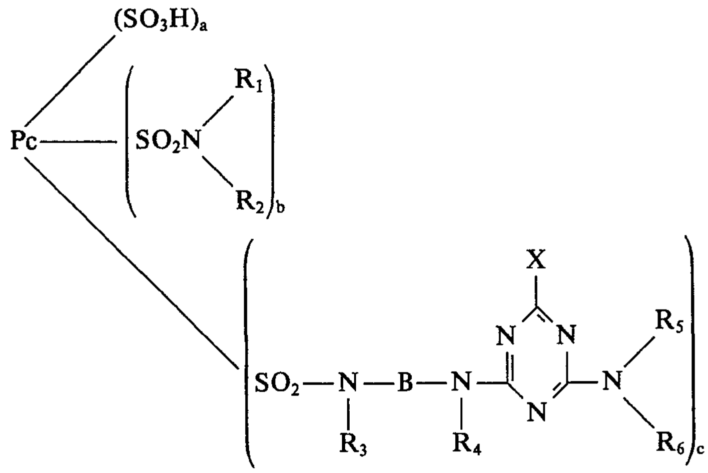

(I)

dans laquelle

Pc = reste d'un dérivé de cuivre ou de nickel de phthalocyanine
$R_1$, $R_2$ = hydrogène, groupe alkyle éventuellement substitué ou bien $R_1$ et $R_2$ forment conjointement avec l'atome d'azote auquel ils sont liès, un noyau pentagonal ou hexagonal hétérocyclique et
$R_3$, $R_4$ = hydrogène ou groupe alkyle éventuellement substitué pont aromatique ou aliphatique éventuellement substitué,
$R_5$, $R_6$ = hydrogène ou reste organique ou bien $R_5$ et $R_6$ forment conjointement avec l'atome d'azote auquel ils sont liès un noyau hétérocyclique renfermant le cas échéant d'autres hétéroatomes,

et

X = fluor ou chlore

et

a = 1 à 3
b = 0 à 2
c = 1 ou 2,

la somme (a + b + c) ne dépassant pas la valeur 4,
caractérisé en ce que sans isoler les stades intermédiaires, on fait réagir successivement un sulfochlorure de phthalocyanine de formule

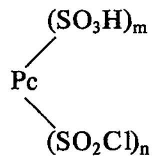

(II)

dans laquelle

Pc a la définition indiquée ci-dessus,
m a une valeur de 0 à 2 et
n a une valeur de 2 à 4,

la somme (m + n) ne dépassant pas la valeur 4, avec un composé de formule

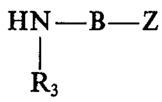

(III)

dans laquelle Z est un groupe $NHR_4$, NHY ou $NO_2$, en ajoutant éventuellement une amine de formule

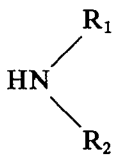

(IV)

B, $R_1$, $R_2$, $R_3$ et $R_4$ ayant la définition donnée ci-dessus et Y étant un groupe éliminable protégeant la fonction amino, puis, au cas où Z est un groupe NHY, on élimine le groupe Y protégeant la fonction amino ou bien ensuite, lorsque Z représente $NO_2$, on réduit le groupe $NO_2$ en groupe amino puis on fait réagir ou bien avec un composant réactif de formule

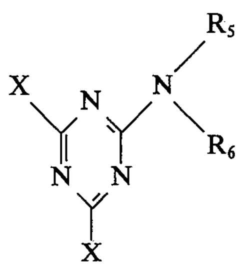

(V)

dans laquelle $R_5$ et $R_6$ ont la définition indiquée ci-dessus et X représente le fluor ou le chlore ou avec la trifluoro- ou la trichlorotriazine comme l'un des composants puis avec une amine de formule

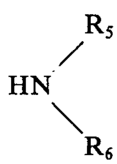

(VI)

dans laquelle $R_5$ et $R_6$ ont la définition indiquée ci-dessus, comme second composant.

2. Procédé suivant la revendication 1, caractérisé en ce qu'on utilise comme composé de formule (III) le composé

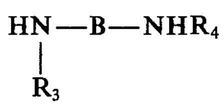

dans lequel B, $R_3$ et $R_4$ ont la définition indiquée dans la revendication 1.

3. Procédé suivant la revendication 2, caractérisé en ce que dans les formules (III) (IV), $R_1$, $R_2$, $R_3$ et $R_4$ représentent l'hydrogène, le groupe méthyle ou le groupe éthyle.

4. Procédé suivant la revendication 2, caractérisé en ce qu'on utilise comme composés de formule (III) des composés diaminobenzéniques éventuellement substitués par des radicaux alkyle en $C_1$ à $C_4$,

qui portent un groupe carboxyle ou un groupe acide sulfonique en position ortho par rapport à un groupe amino.

5. Procédé suivant les revendications 1 à 4, caractérisé en ce qu'on utilise comme amine de formule VI l'ammoniac, la méthylamine, la β-hydroxyéthylamine, ou l'aniline éventuellement substituée par un radical halogéno, COOH, $SO_3H$, $SO_3H$, alkyle en $C_1$ à $C_4$, alkoxy en $C_1$ à $C_4$, $CONH_2$.